# EUROPÄISCHE PATENTANMELDUNG

(11) **EP 3 590 799 A1**
(43) Veröffentlichungstag der Anmeldung: **08.01.2020**
(21) Anmeldenummer: 18182225.5
(22) Anmeldetag: 06.07.2018
(51) Int. Cl.: B62D 33/04

(54) **WANDELEMENT EINES KOFFERAUFBAUS MIT SOCKELSCHEUERLEISTE UND KOFFERAUFBAU**

(71) Anmelder: Schmitz Cargobull AG, 48341 Altenberge (DE)
(72) Erfinder: Beelmann, Reinhard, 45721 Haltern am See (DE)
(74) Vertreter: Cohausz & Florack

(57) **Zusammenfassung**

Beschrieben und dargestellt ist ein Wandelement (11) eines Kofferaufbaus (2) eines Nutzfahrzeugs (1), insbesondere Lastkraftwagen, Anhänger oder Sattelauflieger, mit einem Wandpaneel (12) und mit mehreren zwischen den seitlichen Rändern des Wandelements (11) und mit wenigstens im Wesentlichen parallel zueinander und beabstandet voneinander angeordneten sowie zur Aussteifung des Wandelements (11) mit dem Wandpaneel (12) verbundenen Ständerelementen (17,18), wobei dem unteren Rand des Wandelements (11) eine Sockelscheuerleiste (14) und/oder dem oberen Rand des Wandpaneels eine Dachinnenleiste (41) zugeordnet ist und wobei die Ständerelemente (17,18) abschnittsweise zwischen dem Wandpaneel (12) einerseits und der Sockelscheuerleiste (14) und/oder der Dachinnenleiste (41) andererseits angeordnet sind. Um eine schnellere, einfachere und kostengünstigere Fertigung des Kofferaufbaus zu ermöglichen, ist vorgesehen, dass die Sockelscheuerleiste (14), insbesondere am oberen Rand der Sockelscheuerleiste (14), und/oder die Dachinnenleiste (41), insbesondere am unteren Rand der Dachinnenleiste (41), sich zwischen wenigstens einigen der Ständerelemente (17,18) in Richtung des Wandpaneels (12) erstreckende Laschen (35,42) aufweist.

## Beschreibung

Die Erfindung betrifft ein Wandelement eines Kofferaufbaus eines Nutzfahrzeugs, insbesondere Lastkraftwagen, Anhänger oder Sattelauflieger, mit einem Wandpaneel und mit mehreren zwischen den seitlichen Rändern des Wandelements und mit wenigstens im Wesentlichen parallel zueinander und beabstandet voneinander angeordneten sowie zur Aussteifung des Wandelements mit dem Wandpaneel verbundenen Ständerelementen, wobei dem unteren Rand des Wandelements eine Sockelscheuerleiste und/oder dem oberen Rand des Wandpaneels eine Dachinnenleiste zugeordnet ist und wobei die Ständerelemente abschnittsweise zwischen dem Wandpaneel einerseits und der Sockelscheuerleiste und/oder der Dachinnenleiste andererseits angeordnet sind. Ferner betrifft die Erfindung einen Kofferaufbau eines Nutzfahrzeugs, insbesondere Lastkraftwagen, Anhänger oder Sattelauflieger, mit wenigstens einem solchen Wandelement.

Nutzfahrzeuge, beispielsweise in Form von Lastkraftwagen, Anhängern oder Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern. Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Planeneinheit, wobei die Rahmenstruktur durch Rungen getragen wird, die sich wenigstens an den Ecken des Nutzfahrzeugs befinden.

Neben den Planenaufbauten sind Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden entsprechende Paneelstrukturelemente auf, die als zweischaliges Wandelement ausgebildet sein können. Die Paneele umfassen dabei eine äußere und eine innere, strukturgebende Decklage sowie eine dazwischen vorgesehene Kernlage, die typischerweise aus einem geschäumten Kunststoff gebildet wird. Dabei können die innere und/oder die äußere Decklage selbst bedarfsweise mehrlagig aufgebaut sein. Darüber hinaus sind Kofferaufbauten mit einschaligen Paneelstrukturelementen bekannt, die einen von einem Wandpaneel verschlossenen, umlaufenden Rahmen oder eine von einem Wandpaneel verschlossene Gitterstruktur aus vertikalen und horizontalen Profilen aufweisen. Das Wandpaneel wird dabei aus einem oder aus mehreren Paneelelementen gebildet, die wenigstens im Wesentlichen aus einem glasfaserverstärkten Kunststoff, Stahl oder Aluminium bestehen, sowie bedarfsweise lackiert sind.

Um beispielsweise das Dach abzustützen, können die Paneelstrukturelemente mit einer Mehrzahl von zur Aussteifung des Paneelstrukturelements vorgesehenen, wenigstens im Wesentlichen quer zur Längsrichtung des Paneelstrukturelements ausgerichteten und in Längsrichtung des Paneelstrukturelements zwischen den Rändern des Paneelstrukturelements angeordneten Ständerelementen vorgesehen sein. In einigen Fällen sind die Ständerelemente dann ähnlich den Mittelrungen von Planenaufbauten in Längsrichtung des Paneelstrukturelements voneinander beabstandet angeordnet, um einen Holm des Aufbaus zu tragen. Ferner können die Ständerelemente an der Innenseite des Paneelstrukturelements mit einem geschlossenen Wandpaneel verbunden sein, das selbst aus mehreren Paneelstrukturelementen gebildet sein und sich über wenigstens im Wesentlichen die gesamte Länge sowie wenigstens im Wesentlichen die gesamte Höhe des Paneelstrukturelements erstrecken kann.

Des Weiteren weisen Kofferaufbauten meist sogenannte Sockelscheuerleisten auf, um den unteren Rand der Seitenwände gegenüber Beschädigung beim Be- und Entladen zu schützen. Die Sockelscheuerleisten erstrecken sich am unteren Rand und meist über die gesamte Länge der Seitenwand, wobei die Sockelscheuerleisten den in den Laderaum weisenden inneren Abschluss der Seitenwände bilden. Die Sockelscheuerleisten sind so vorgesehen, dass Paletten beim Be- und/oder Entladen des Kofferaufbaus gegen die Sockelscheuerleisten stoßen und/oder an den Sockelscheuerleisten scheuern. Aber auch Hubwagen oder Gabelstapler sollen, wenn sie versehentlich mit der Seitenwand in Kontakt gelangen, vorwiegend an die Sockelscheuerleiste stoßen bzw. an dieser scheuern.

Vor diesem Hintergrund müssen die Sockelscheuerleisten und die Seitenwände am unteren Rand besonders widerstandsfähig und stabil ausgebildet sein, um eine nachhaltige Beschädigung beim Be- und/oder Entladen zu vermeiden und lange Lebensdauern der Seitenwände bzw. Kofferaufbauten sicherstellen zu können. Dies führt zu einem recht aufwändigen Aufbau der Seitenwände an ihrem unteren Rand, regelmäßig mit zusätzlichen, aussteifenden Bauteilen. Damit steigen nicht nur die Materialkosten, sondern auch Fertigungskosten an, da die Fertigung aufwendiger und langwieriger ist.

Zudem kann am oberen Rand des Wandpaneels eine Dachinnenleiste vorgesehen sein, die dem oberen Abschluss der Seitenwand und/oder dem Verbinden der Seitenwand bzw. dem Wandpaneel mit dem Dach, einem Holm und/oder einer Holmstruktur des Kofferaufbaus dienen kann. Dies ist insbesondere dann zweckmäßig, wenn das Wandpaneel einschalig aufgebaut ist.

Vor diesem Hintergrund müssen auch die Dachinnenleisten und die Seitenwände am oberen Rand besonders widerstandsfähig und stabil ausgebildet sein, um eine lange Lebensdauer der Seitenwände bzw. Kofferaufbauten sicherstellen zu können. Dies führt regelmäßig zu einem recht aufwendigen Aufbau der Seitenwände an ihrem oberen Rand. Damit steigen nicht nur die Materialkosten, sondern auch Fertigungskosten an, da die Fertigung aufwendiger und langwieriger ist.

Daher liegt der vorliegenden Erfindung die Aufgabe zugrunde, das Wandelement und den Kofferaufbau jeweils der eingangs genannten und zuvor näher erläuterten Art derart auszugestalten oder weiterzubilden, dass eine schnellere, einfachere und kostengünstigere Fertigung des Kofferaufbaus ermöglicht wird.

Diese Aufgabe ist bei einem Wandelement nach dem Oberbegriff von Anspruch 1 dadurch gelöst, dass die Sockelscheuerleiste, insbesondere am oberen Rand der Sockelscheuerleiste, und/oder die Dachinnenleiste, insbesondere am unteren Rand der Dachinnenleiste, sich zwischen wenigstens einigen der Ständerelemente in Richtung des Wandpaneels erstreckende Laschen aufweist.

Die genannte Aufgabe ist zudem bei einem Kofferaufbau nach dem Oberbegriff von Anspruch 15 dadurch gelöst, dass wenigstens ein Wandelement nach einem der Ansprüche 1 bis 14 ausgebildet ist.

Durch die sich zwischen wenigstens einigen der Ständerelemente in Richtung des Wandpaneels erstreckende Laschen aufweisende Sockelscheuerleiste und/oder Dachinnenleiste kann ein einfach aufgebautes und zugleich leichtes aber steifes und stabiles Wandelement geschaffen werden. Dies erlaubt letztlich eine einschalige Ausgestaltung des Wandelementelements. Das Wandelementelement bedarf mithin lediglich eines einzigen geschlossenen Paneels, was folglich eine einschalige Bauweise des Wandelementelements ermöglicht. Anders ausgedrückt ist nur eine äußere Decklage, d.h. das Wandpaneel, erforderlich, die das Wandelement und damit die entsprechende Wand verschließt. Es kann aber sowohl auf eine innere Decklage als auch auf eine Kernlage aus einem geschäumten Kunststoff, Sperrholz, nicht geschäumtem Kunststoff oder einer Wabenstruktur verzichtet werden.

Die Sockelscheuerleiste ist einerseits so ausgebildet und angeordnet, dass sie den inneren Abschluss des unteren Rands des Wandelements bildet. Andererseits erstreckt sich die Sockelscheuerleiste aber auch nach außen in Richtung des Wandpaneels, was für einen Abschluss sorgen kann, und zwar insbesondere am oberen Rand der Sockelscheuerleiste, so dass sich dahinter kein Schmutz und keine Ladung sammeln können. Auch wird die Reinigung des Kofferaufbaus verbessert. Zudem führt jedoch die sich in Richtung des Wandpaneels erstreckende und zwischen die Ständerelemente eingreifende Lasche für eine Aussteifung der Sockelscheuerleiste, insbesondere zu einer Steigerung des Flächenträgheitsmoments. Zudem können infolge der Lasche auf die Sockelscheuerleiste einwirkende Kräfte besser an die Ständerelemente und/oder das Wandelement abgeleitet werden.

Die Dachinnenleiste ist einerseits so ausgebildet und angeordnet, dass sie den inneren Abschluss des oberen Rands des Wandelements und bedarfsweise auch wenigstens teilweise den oberen Abschluss des Wandpaneels bildet. Dabei kann die Dachinnenleiste bevorzugt so angeordnet sein, dass sie nicht Teil der Außenhaut des Kofferaufbaus ist oder anders ausgedrückt, von der Außenseite des Kofferaufbaus nicht sichtbar ist. Der Abschluss des Wandpaneels durch die Dachinnenleiste kann alternativ oder zusätzlich so vorgesehen sein, dass hinter das Dachinnenprofil kein Schmutz und keine Ladung gelangen kann. Auch wird so die Reinigung des Kofferaufbaus verbessert. Zudem führt jedoch die sich in Richtung des Wandpaneels erstreckende und zwischen die Ständerelemente eingreifende Lasche für eine Aussteifung der Dachinnenleiste, insbesondere zu einer Steigerung des Flächenträgheitsmoments. Zudem kann infolge der Lasche eine stabilere Verbindung des Wandpaneels mit dem Dach realisiert werden.

Bei einer ersten besonders bevorzugten Ausgestaltung des Wandelements liegen die Laschen der Sockelscheuerleiste und/oder der Dachinnenleiste im hinteren Bereich am Wandpaneel an. Dadurch kann das Wandpaneel weiter ausgesteift werden. Zudem lassen sich somit die in die Sockelscheuerleiste eingeleiteten Kräfte besser ableiten, ohne dass es zu einer nachhaltigen Beschädigung des Wandelements kommt. Hinsichtlich der Dachinnenleiste lässt sich trotz der im Betrieb auftretenden Verwindung des Kofferaufbaus eine sichere und langlebige Verbindung des Wandpaneels mit dem Dach erreichen. Dabei ist es aus den genannten Gründen zweckmäßig, wenn die Laschen der Sockelscheuerleiste und/oder der Dachinnenleiste im hinteren Bereich mit dem Wandpaneel verbunden sind. Für eine flächige Kraftableitung und eine einfache sowie kostengünstige Montage ist es zudem zweckmäßig, wenn die Laschen der Sockelscheuerleiste und/oder der Dachinnenleiste im hinteren Bereich mit dem Wandpaneel verklebt sind.

Die Sockelscheuerleiste und/oder die Dachinnenleiste kann zudem bedarfsweise an den Ständerelementen anliegen bzw. mit den Ständerelementen verbunden sein. Eine Verbindung, sei sie kraftschlüssig und/oder formschlüssig zwischen den Ständerelementen einerseits und der Sockelscheuerleiste und/oder der Dachinnenleiste andererseits ist aber nicht zwingend. So kann beispielsweise besser der Verwindung eines Wandelements während des Transports von Ladung Rechnung getragen werden. Das Verwinden des Wandelements führt nicht zu einer Beschädigung bzw. zu einem Lösen der Sockelscheuerleiste und/oder der Dachinnenleiste, wenn diese nicht, insbesondere nicht fest, mit den Ständerelementen verbunden ist.

Alternativ oder zusätzlich können sich die Laschen der Sockelscheuerleiste und/oder der Dachinnenleiste angrenzend zum Wandpaneel parallel zum Wandbereich erstrecken, um auf diese Weise eine große Anlagefläche an das Wandpaneel bereitzustellen, was wiederum dem Aussteifen und dem Ableiten der Kräfte dienlich ist. Dabei kann eine besonders stabile und steife Profilestruktur erhalten werden, wenn sich die entsprechenden Laschenränder der Sockelscheuerleiste nach unten und/oder die entsprechenden Laschenränder der Dachinnenleiste nach oben erstrecken. So kann jeweils annähernd eine Kastenstruktur bereitgestellt werden. Auch in diesem Zusammenhang bietet es sich zum Aussteifen und zum Ableiten von Kräften an, wenn die Laschenränder mit dem Wandpaneel verbunden sind. Für eine flächige Kraftableitung und eine einfache sowie kostengünstige Montage ist es zudem zweckmäßig, wenn die Laschenränder mit dem Wandpaneel verklebt sind.

Zur Verringerung der Materialkosten und der Fertigungskosten bietet es sich zudem an, wenn die Sockelscheuerleiste und/oder die Dachinnenleiste aus wenigstens einem Blechteil gebildet ist. Damit das Blechteil widerstandsfähig ist und eine lange Lebensdauer aufweist, ist es zweckmäßig, wenn das wenigstens eine Blechteil als Stahlblechteil ausgebildet ist. Aus fertigungstechnischen Gründen und Stabilitätsgründen kann es sich alternativ oder zusätzlich anbieten, das Blechteil als rolliertes Blechteil auszubilden.

Zur einfachen und kostengünstigen Fertigung, die die Stabilität nicht beeinträchtigt, bietet es sich an, wenn die Laschen der Sockelscheuerleiste und/oder der Dachinnenleiste nach hinten umgebogen, rolliert und/oder abgekantet sind. Um dem Kofferaufbau besser sauberhalten bzw. besser reinigen zu können, werden die Laschen der Sockelscheuerleiste bevorzugt am oberen Rand der Sockelscheuerleiste nach hinten umgebogen, rolliert und/oder abgekantet. Aus demselben Grund bietet es sich an, wenn die Laschen der Dachinnenleiste am unteren Rand der Sockelscheuerleiste nach hinten umgebogen, rolliert und/oder abgekantet sind. So kann sich nicht so leicht Schmutz oder Ladung im Bereich der Sockelscheuerleiste und/oder der Dachinnenleiste ansammeln. Außerdem wird so das Profil der Sockelscheuerleiste und/oder der Dachinnenleiste stabiler und steifer.

Alternativ oder zusätzlich zur Ausgestaltung der eigentlichen Laschen, bietet es sich an, die Laschenränder nach hinten umzubiegen, rollieren und/oder abzukanten. Dies lässt sich schnell und einfach realisieren und sorgt für eine weitere Aussteifung der Sockelscheuerleiste und/oder der Dachinnenleiste. Unabhängig davon ist es aber aus Steifigkeitsgründen ebenso wie zur besseren Reinigung des Kofferaufbaus zweckmäßig, wenn die Laschenränder am oberen Rand der Sockelscheuerleiste und/oder am unteren Rand der Dachinnenleiste nach hinten umgebogen, rolliert und/oder abgekantet sind.

Um zu verhindern, dass das Wandpaneel unter Last knickt, können seitlich an dem Wandpaneel Ständerelemente angebracht werden, und zwar in entsprechenden Abständen, um das gewünschte Flächenträgheitsmoment zu erzielen. Die äußeren Ständerelemente können im Falle einer Stirnwand und/oder einer Seitenwand auch als Eckrungen ausgebildet sein, welche einen Längsholm und/oder Querholm tragen. Die Ständerelemente sind dazu bevorzugt zwischen den entsprechenden Rändern des Wandelements vorgesehen. Neben dem einen Wandpaneel und den, vorzugsweise wenigstens vier, insbesondere wenigstens sechs, Ständerelementen sind zwischen den gegenüberliegenden Rändern des Wandelements für die Festigkeit und Steifigkeit vorzugsweise keine weiteren Bauteile erforderlich. Es können natürlich noch weitere Baueiteile vorgesehen sein. Diese können vorzugsweise aber der Ladungssicherung oder anderen Funktionen dienen. Um beispielsweise das Dach abzustützen, kann eine Mehrzahl von Ständerelementen zur Aussteifung des Wandelements vorgesehenen und/oder wenigstens im Wesentlichen quer zur Längsrichtung des Wandelements ausgerichteten sein. Zudem können sich die Ständerelemente bevorzugt über wenigstens im Wesentlichen die gesamte Höhe des Wandelements und/oder des Wandpaneels erstrecken, um ein Knicken des Wandelements und/oder des Wandpaneels zu vermeiden sowie das Dach abzustützen.

Unabhängig davon bietet es sich an, wenn das Wandpaneel durch ein wenigstens im Wesentlichen geschlossenes Wandpaneel gebildet wird. Dies ist förderlich zur Aussteifung des Wandelements und ermöglicht zudem in einfacher Weise ein feuchtigkeitsdichtes Verschließen des Kofferaufbaus.

Um ein leichtes und stabiles Wandpaneel bereitzustellen, das zugleich steif ist und eine hohe Schlagzähigkeit aufweist, kann das wenigstens eine Wandpaneel aus einem Verbundlaminat umfassend wenigstens zwei Metallschichten und wenigstens eine zwischen den wenigstens zwei Metallschichten vorgesehene Kunststoffschichten gebildet sein. Dabei bietet es sich aufgrund der Materialeigenschaften und der Materialkosten an, die wenigstens eine Kunststoffschicht wenigstens im Wesentlichen aus einem thermoplastischen Kunststoff, vorzugsweise aus wenigstens einem Olefin, insbesondere wenigstens überwiegend aus Polypropylen (PP), zu bilden. Alternativ oder zusätzlich ermöglicht wenigstens eine Metallschicht aus Aluminium und/oder Stahl eine kostengünstige Herstellung eines Wandelements mit bevorzugten mechanischen Eigenschaften. Unabhängig davon kann zum Schutz des Wandelements vor äußeren Einflüssen, insbesondere Witterungseinflüssen, wenigstens eine Außenseite des Wandpaneels wenigstens im Wesentlichen aus einem Lack, insbesondere Klarlack, gebildet sein.

Die Fertigung des Wandelements kann zudem vereinfacht werden, wenn das Wandpaneel eine Mehrzahl von nebeneinander angeordneten Paneelelementen aufweist. So kann das Wandpaneel aus einzelnen und kleineren Paneelemeneten aufgebaut werden. Dabei erstrecken sich die Paneelelemente vorzugsweise wenigstens im Wesentlichen quer zur Längsrichtung des Wandelements. Dann kann das Wandpaneel einfach der Länge nach durch nebeneinander abgeordnete Paneelelemente aufgebaut werden. Zum einfachen und schnellen Verbinden der Paneelelemente bietet es sich an, wenn die Paneelelemente von dem Wandpaneel nach innen in Richtung der Ständerelemente vorstehende Verbindungsbereiche umfassen. Diese sind dann zweckmäßig zugänglich, um die Paneelelemente in den Verbindungsbereichen miteinander zu verbinden. Dabei kann die Verbindung weiter vereinfacht und beschleunigt werden, wenn die Paneelelemente in den Verbindungsbereichen miteinander verbunden, insbesondere verklebt, werden.

Alternativ oder zusätzlich kommen auch andere kraftschlüssige und/oder formschlüssige Verbindungen, beispielsweise Nietverbindungen, in Frage, um die Paneelelemente miteinander zu verbinden. Außerdem kann ein Verkleben der Paneelelemente untereinander bedarfsweise eher dem Abdichten als dem eigentlichen Verbinden dienen, und zwar insbesondere für den Fall, dass eine weitere kraftschlüssige und/oder formschlüssige Verbindung zum Verbinden der Paneelelemente untereinander vorgesehen ist.

Die Verbindungsbereiche können dabei leicht und zügig geschaffen werden, wenn die miteinander zu verbindenden Paneelelemente an ihren jeweils benachbarten Rändern zur Innenseite des Wandpaneels umgebogen, insbesondere abgekantet oder rolliert, werden. Dies erlaubt zudem ein schnelles und unkompliziertes Verbinden der Paneelelemente an den umgebogenen, insbesondere abgekanteten oder rollierten, benachbarten Rändern, was insbesondere dann der Fall ist, wenn die entsprechenden Ränder der angrenzenden Paneelelemente jeweils miteinander verbunden, insbesondere verklebt, werden.

Zur weiteren Aussteifung des Wandelements bietet es sich zudem an, wenn die Ständerelemente wenigstens teilweise den Verbindungsbereichen der Paneelelemente zugeordnet sind. So kann beispielsweise ein versehentliches Lösen der Verbindungen vermieden werden. Dies gilt insbesondere dann, wenn die Ständerelemente wenigstens teilweise die Verbindungsbereiche der Paneelelemente überdeckend und/oder überbrückend angeordnet sind. So werden die Verbindungsbereiche gegenüber mechanischen Einwirkungen geschützt. Um die Verbindungsbereiche zu entlasten, können die Ständerelemente wenigstens teilweise außerhalb der Verbindungsbereiche der Paneelelemente mit jeweils den über Verbindungsbereiche miteinander verbundenen Paneelelementen verbunden sein. Auch hier lässt sich eine Verbindung schnell und unkompliziert etablieren, wenn die Ständerelemente mit den Paneelelementen verklebt werden.

Unabhängig davon lassen sich die Ständerelemente einfach als Profile fertigen, und zwar insbesondere aus Metall. Aus Gewichtsgründen und zur Materialeinsparung können die Ständerelemente als Hohlprofile ausgebildet sein. Zudem müssen die Ständerelemente nicht als geschlossene Profile ausgebildet sein, sondern können aus denselben Gründen bevorzugt als offene Profile ausgebildet sein. Für eine platzsparende und zugleich stabile Ausgestaltung der Ständerelemente bietet es sich an, wenn die Ständerelemente, insbesondere wenigstens im Wesentlichen durchgängig, einen trapezförmigen und/oder omegaförmigen und/oder hutförmigen Querschnitt aufweisen. Derartige Querschnitte erlauben auch eine einfache Verbindung der Ständerelemente mit dem Wandpaneel bzw. den Paneelelementen.

Aus Platzgründen aber auch aus Stabilitätsgründen bietet es sich an, wenn die Ständerelemente jeweils eine Aufnahme zur wenigstens abschnittsweisen Aufnahme eines, insbesondere sich seitlich von dem Wandpaneel weg und in Richtung des jeweiligen Ständerelements erstreckenden, Verbindungsbereich aufweisen. Zudem können die Ständerelemente so einfach mit entsprechenden Anlageflächen zu gegenüberliegenden Seiten der Verbindungsbereiche an den zugehörigen Paneelelementen anliegen. Für eine verbesserte Kraftübertragung vom Wandpaneel bzw. von den Paneelelementen an die Ständerelemente können die Ständerelemente in entsprechender Weise an den zugehörigen Paneelelementen verklebt sein.

Die zuvor beschriebenen Vorteile der Erfindung kommen insbesondere dann zum Tragen, wenn das Wandelement als Seitenwand oder Stirnwand ausgebildet ist. Dort werden nämlich Sockelscheuerleisten besonders zweckmäßig eingesetzt.

Aus Gründen der Stabilität bietet es sich besonders an, wenn der Abstand zwischen den Verbindungsbereichen der Paneelelemente und/oder zwischen den Ständerelementen wenigstens im Wesentlichen gleichförmig ausgebildet ist. So sind die Verbindungsbereiche und/oder die Ständerelemente gleichmäßig verteilt entlang des Wandelements angeordnet. Dabei kann der jeweilige Abstand zwischen 0,3 m und 1,4 m, insbesondere zwischen 0,4 m und 1,3 m, betragen. Wenn Ständerelemente in einem wiederkehrenden Abstand von zwischen 1,0 m bis 1,4 m, vorzugsweise von zwischen 1,1 m und 1,3 m, insbesondere von ungefähr 1,2 m, angeordnet sind, können die Abstände der Ständerelemente entlang des Wandelements mit der Länge zu transportierender Paletten, insbesondere sogenannter Europaletten, korrespondieren. Dies ist auch hinsichtlich der zu betreibenden Ladungssicherung vorteilhaft. Wenn die Ständerelemente in einem wiederkehrenden Abstand zwischen 0,4 m bis 0,8 m, vorzugsweise zwischen 0,5 m und 0,7 m, insbesondere von ungefähr 0,6 m, beträgt, weisen jeweils übernächste Ständerelemente einen Abstand auf, der etwa der Länge zu transportierender Paletten, insbesondere sogenannter Europaletten, entspricht. Entsprechendes gilt für jeweils jedes dritte Ständerelement, wenn die Ständerelemente in einem wiederkehrenden Abstand von zwischen 0,3 m bis 0,5 m, insbesondere von ungefähr 0,4 m, angeordnet sind. Dann wird zudem erreicht, dass jeweils zwei übernächste Ständerelemente etwa im Abstand der Breite zu transportierender Paletten, insbesondere sogenannter Europaletten, angeordnet sind. Diese Breite beträgt dabei etwa 0,8 m. Der entsprechende Abstand der Ständerelemente wird dabei vorzugsweise nicht zwischen den angrenzenden Rändern der Ständerelemente, sondern zwischen den sich entsprechenden Rändern oder zwischen den Mittellinien der benachbarten Ständerelemente gemessen. Ferner ist es nicht erforderlich, dass jeweils benachbarte Ständerelemente einen Abstand von zwischen 1,0 m bis 1,4 m, vorzugsweise von zwischen 1,1 m und 1,3 m, insbesondere von ungefähr 1,2 m, aufweisen. Dies kann beispielsweise jeweils für übernächste Ständerelemente gelten, die dann etwa im Abstand einer Palettenlänge angeordnet sein können. Dazwischen kann dann, vorzugsweise ebenfalls regelmäßig beabstandet, wenigstens ein zusätzliches Ständerelement vorgesehen sein. Bei jeweils einem zusätzlichen Ständerelement können die Abstände jeweils benachbarter Ständerelemente vorzugsweise zwischen 0,3 m und 0,5 m, insbesondere zwischen 0,5 m und 0,7 m, liegen.

Nachfolgend wird die Erfindung anhand einer lediglich ein Ausführungsbeispiel darstellenden Zeichnung näher erläutert. In der Zeichnung zeigt
- Fig. 1: einen erfindungsgemäßen Kofferaufbau in einer perspektivischen Ansicht,
- Fig. 2: einen Abschnitt eines Wandelements des Kofferaufbaus gemäß Fig. 1 in einer perspektivischen Ansicht,
- Fig. 3A-B: unterschiedliche Ständerelemente des Wandelements aus Fig. 2 in einer perspektivischen Ansicht,
- Fig. 4: ein Paneelelement des Wandpaneels des Wandelements aus Fig. 2 in einer perspektivischen Ansicht,
- Fig. 5: den Schichtaufbau des Paneelelements aus Fig. 4 in einem Querschnitt,
- Fig. 6: ein Detail des Wandelements aus Fig. 2 in einer Schnittansicht,
- Fig. 7: ein Detail des unteren Rands des Wandelements aus Fig. 2 in einer perspektivischen Ansicht,
- Fig. 8: die Sockelscheuerleiste des Wandelements aus Fig. 2 in einer perspektivischen Ansicht,
- Fig. 9: ein Detail des unteren Rands des Wandelements aus Fig. 2 in einer Schnittansicht,
- Fig. 10: ein Detail des oberen Rands des Wandelements aus Fig. 2 in einer perspektivischen Ansicht,
- Fig. 11: die Dachinnenleiste des Wandelements aus Fig. 2 in einer perspektivischen Ansicht,
- Fig. 12: ein Detail des oberen Rands des Wandelements aus Fig. 2 in einer Schnittansicht,
- Fig. 13: ein Detail des Kofferaufbaus im Bereich der Verbindung einer Seitenwand mit der Bodenstruktur in einer Schnittansicht und
- Fig. 14: ein Detail eines alternativen Kofferaufbaus im Bereich der Verbindung einer Seitenwand mit der Bodenstruktur in einer Schnittansicht.

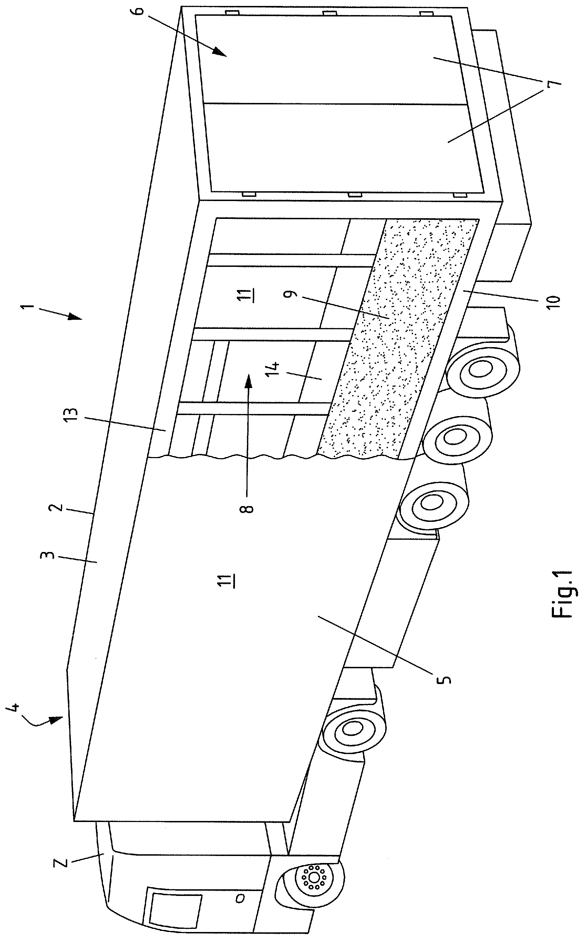

In der Fig. 1 ist ein Nutzfahrzeug 1 mit einem Kofferaufbau 2 in einer perspektivischen Ansicht dargestellt, das von einer Zugmaschine Z gezogen wird. Der Kofferaufbau 2 umfasst ein festes Dach 3, eine feste Stirnwand 4, zwei feste Seitenwände 5 und eine feste Rückwand 6, die im Wesentlichen durch zwei Flügeltüren 7 gebildet wird. Zudem umfasst der Aufbau einen Laderaum 8, der nach unten durch einen Ladeboden 9 einer Bodenstruktur 10 begrenzt wird, wobei der Ladeboden 9 dem Aufstellen von Ladung dient.

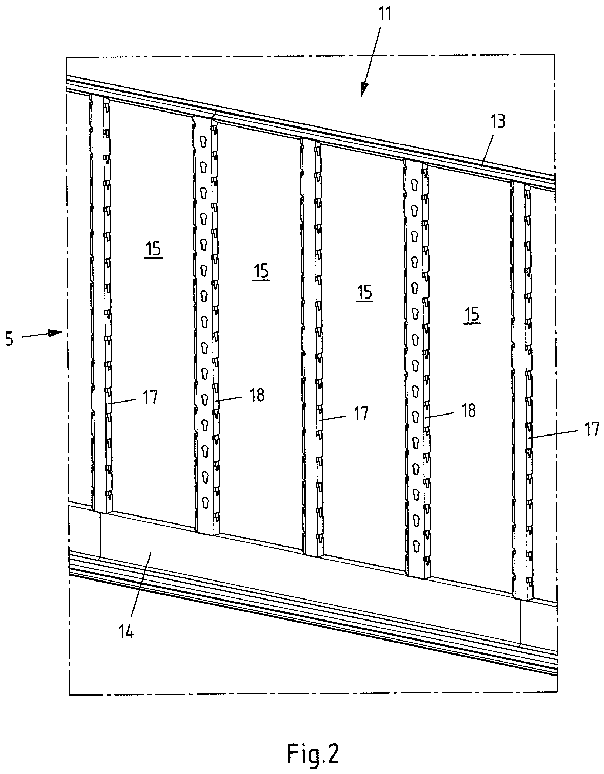

In der Fig. 2 ist ein Detail eines Wandelements 11 dargestellt, welches eine Seitenwand 5 des Kofferaufbaus 2 bildet. Bei dem dargestellten und insoweit bevorzugten Kofferaufbau 2 ist das Wandelement 11 einschalig ausgebildet, wobei die einzige Schale des Wandelements 11 durch ein geschlossenes, die entsprechende Seite des Kofferaufbaus 2 verschließendes Wandpaneel 12 gebildet wird. Das Wandpaneel 12 ist an seinem oberen Rand mit einem Holm bzw. einer Holmstruktur 13 verbunden, die sich entlang des Wandelements 11 erstreckt und die Verbindung der Seitenwand 5 mit dem Dach 3 bereitstellt. Die Holmstruktur 13 ist als verwindungssteifes Trägerelement mit einem hohen Flächenträgheitsmoment ausgebildet, um so der Aussteifung des Kofferaufbaus 2 zu dienen. Dem unteren Rand des Wandelements 11 bzw. des Wandpaneels 12 zugeordnet ist eine sogenannte Sockelscheuerleiste 14 vorgesehen, die das Wandelement 11 bzw. das Wandpaneel 12 vor Beschädigungen während des Be- und Entladens schützt. So stoßen bzw. scheuern Hubwagen, Rollwagen, Paletten etc. beim Be- und Entladen vornehmlich an die Sockelscheuerleiste 14, die diesen Belastungen besser widerstehen kann, als andere Bereiche des Wandelements 11.

Das Wandelement 11 weist eine Reihe von in Längsrichtung des Wandelements 11 nebeneinander angeordneter Paneelelemente 15 auf, die sich wenigstens im Wesentlichen über die gesamte Breite bzw. Höhe des Wandelements 11 bzw. der Seitenwand 5 erstrecken. Den Verbindungsbereichen 16 zweier aneinander angrenzender Paneelelemente 15 zugeordnet ist jeweils ein Ständerelement 17,18, das sich quer zur Längsrichtung des Wandelements 11 erstreckt. Es müsste aber nicht jeweils ein Verbindungsbereich 16 und ein Ständerelement 17,18 wechselseitig einander zugeordnet sein. Bei dem dargestellten und insoweit bevorzugten Wandelement 11 erstrecken sich die Ständerelemente 17,18 wenigstens im Wesentlichen vertikal. Zudem erstrecken sich die Ständerelemente 17,18 über die gesamte Breite oder Höhe des Wandelements 11 bzw. der Seitenwand 5. Dadurch tragen die Ständerelemente 17,18 die Holmstruktur 12 bzw. das Dach 3, dessen Gewicht über die Holmstruktur 13 wenigstens teilweise an die Ständerelemente 17,18 abgeleitet wird. Die Gewichtskräfte des Dachs 3 werden von den Ständerelementen 17,18 in die Bodenstruktur 10 des Kofferaufbaus 2 weitergeleitet.

Die einzelnen Paneelelemente 15 weisen eine Breite zwischen 550 mm und 650 mm auf. Mithin beträgt auch der Abstand jeweils benachbarter Ständerelemente 17,18 ebenfalls zwischen 550 mm und 650 mm. Es wären aber auch Breiten der Paneelelemente 17 zwischen beispielsweise 1100 mm und 1300 mm denkbar und zweckmäßig. Dann würde bedarfsweise der Abstand der jeweils benachbarten Ständerelemente 19,20 wenigstens etwa der Breite der Paneelelemente 17 entsprechen. Der Abstand wird dabei nicht von den einander zugeordneten Rändern der Ständerelemente 17,18, sondern von den Mittellinien der Ständerelemente 17,18 oder den Stellen der Ständerelemente 17,18 aus gemessen, die die Verbindungsbereiche 16 der zugeordneten Paneelelemente 15 überdecken. Bei dem dargestellten und insoweit bevorzugten Wandelement 11 sind zwei Arten von Ständerelementen 17,18 vorgesehen, die jeweils abwechselnd zueinander entlang der Längsrichtung des Wandelements 12 vorgesehen sind.

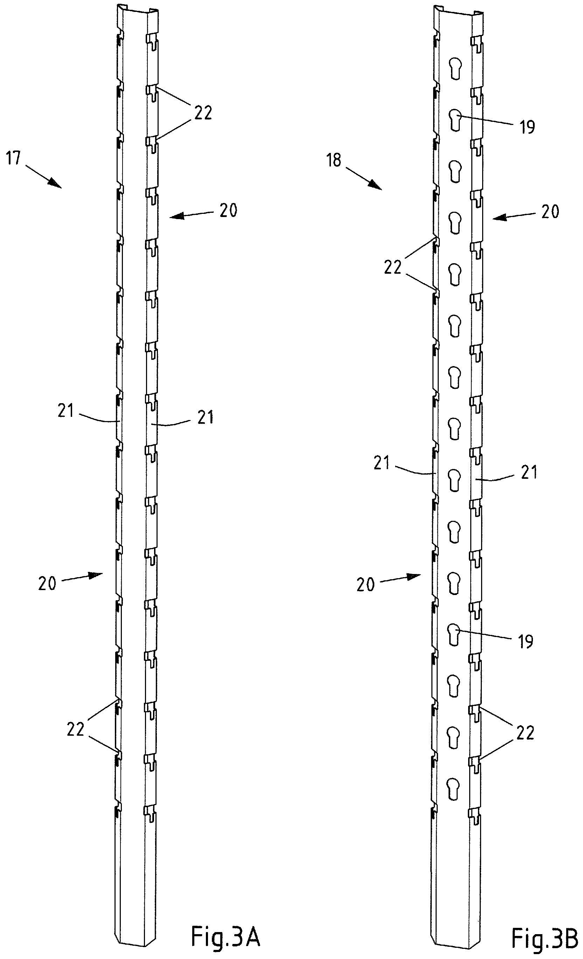

In der Fig. 3A-B sind die beiden Arten von Ständerelementen 17,18 separat dargestellt. Eine Art der Ständerelemente 17 ist schmaler als die andere Art der Ständerelemente 18. Die breitere Art der Ständerelemente 18 weist zudem an der von dem Wandpaneel 12 wegweisenden Seite über die Länge des Ständerelements 18 verteilt mehrere Ladungssicherungsöffnungen 19 zum Einhaken von Ladungssicherungselementen auf. Die breiteren Ständerelemente 18 sind ferner so angeordnet, dass sie ausgehend von der Stirnwand 4, jeweils etwa im Abstand von einer Europalette, also etwa zwischen 1150 mm und 1250 mm aufeinanderfolgen. Der Abstand benachbarter Ständerelemente 19,20 kann mithin bevorzugt zwischen 550 mm und 650 mm betragen. Bedarfsweise, insbesondere in Bezug auf die Länge von Europaletten kann der Abstand benachbarter Ständerelemente 19,20 aber auch zwischen 1100 mm und 1300 mm betragen. Insbesondere in Bezug auf die Breite von Europaletten in der Größenordnung von 800 mm kann der Abstand benachbarter Ständerelemente 19,20 aber auch zwischen 300 mm und 500 mm betragen. Den beiden Ständerelementen 17,18 ist gemein, dass sie an einander zugeordneten Seiten 20 seitlich nach außen in Richtung des Wandpaneels 12 abgeschrägte Seitenflächen 21 aufweisen, die bei einer Kollision mit der Ladung beim Be- und Entladen des Kofferaufbaus 2 die Ladung in Richtung des Laderaums 8 ableiten, um eine nachhaltige Beschädigung des entsprechenden Ständerelements 17,18 zu vermeiden. In den Seitenflächen 21 sind über die Länge des Ständerelements 17,18 verteilt mehrere Verbindungsmittel 22 zum Einhaken von Ladungssicherungselementen oder von Ladungssicherungsprofilen vorgesehen. Grundsätzlich könnten anstelle von unterschiedlichen Arten von Ständerelementen 17,18 bei dem Wandelement 11 auch nur gleichartige Ständerelemente 17,18 vorgesehen sein.

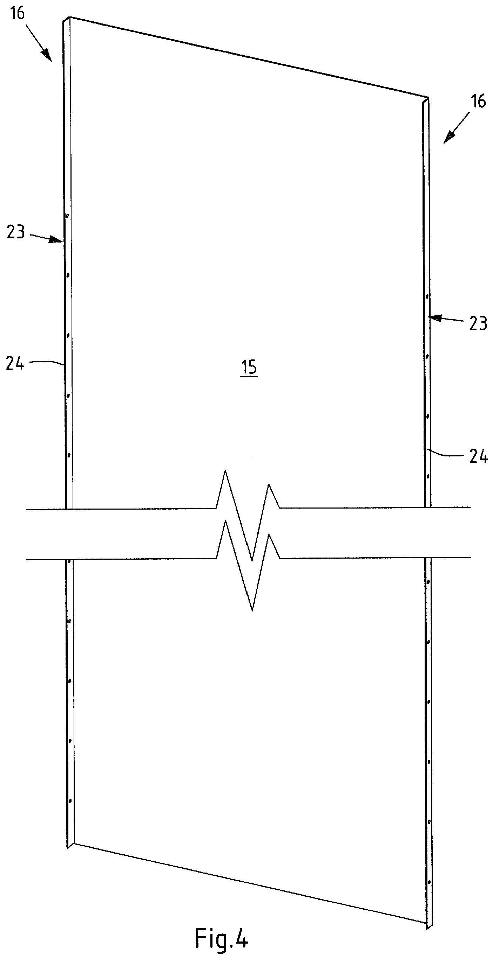

In der Fig. 4 ist ein Paneelelement 15 des Wandpaneels 12 aus Fig. 2 dargestellt. Die Paneelelemente 15 des Wandpaneels 12 aus Fig. 2 sind gleichartig aufgebaut und weisen demnach jeweils dieselben Abmessungen auf, auch wenn dies nicht zwingend der Fall sein muss. Die Paneelelemente 15 sind in den Verbindungsbereichen 16 an ihren seitlichen Rändern 23 nach innen in Richtung des Laderaums 8 umgebogen. Die Ränder 23 weisen daher jeweils eine Verbindungsfläche 24 auf, die aneinander angrenzend und wenigstens im Wesentlichen parallel zueinander ausgerichtet sind. Die entsprechenden Verbindungsflächen 24 werden dann zur Bildung des Wandpaneels 12 miteinander verbunden, insbesondere verklebt. Die Paneelelemente 15 sind jeweils als mehrschichtiges Verbundlaminat 25 ausgebildet.

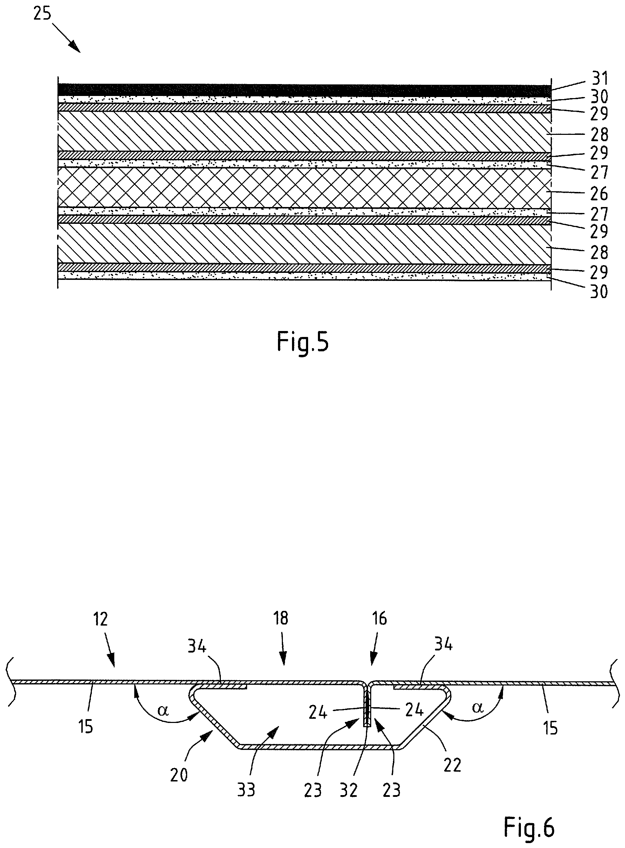

Der Aufbau des vorliegenden und insoweit bevorzugten Verbundlaminats 25 ist in der Fig. 5 exemplarisch dargestellt, wobei die Schichtdicken des Verbundlaminats nicht maßstabsgetreu wiedergegeben sind. Bei diesem Verbundlaminat 25 ist eine Kunststoffschicht 26 aus wenigstens im Wesentlichen Polypropylen (PP) vorgesehen, in dessen äußere Schichten ein Haftvermittler in Form von Maleinsäureanhydrid eingebracht ist. Die Kunststoffschicht 26 weist eine Dicke zwischen 0,5 mm und 3 mm, vorzugsweise zwischen 0,6 mm und 2 mm, insbesondere zwischen 0,8 mm und 1,2 mm auf. Zudem sind auf die Außenseiten der Kunststoffschicht 26 Haftvermittlerschichten und Lack-, insbesondere Klarlackschichten 27, einer Dicke von etwa 1 µm aufgebracht. An diese Lackschichten, insbesondere Klarlackschichten 27, schließen sich Metallschichten 28 einer Dicke zwischen 50 µm und 900 µm, vorzugsweise zwischen 100 µm und 600 µm, insbesondere zwischen 200 µm bis 300 µm an, die jeweils an beiden Seiten mit einer Magnesium-Zink-Beschichtung Aluminium-Zink-Beschichtung 29 einer Dicke von zwischen 8 µm und 30 µm, vorzugsweise zwischen 9 µm und 20 µm, insbesondere zwischen 10 µm und 15 µm versehen sind. Dabei sind die Metallschichten 29 bedarfsweise zunächst mit den Lack-, insbesondere Klarlackschichten 28, versehen, die dann über die Haftvermittlerschichten an die Kunststoffschicht 27 angebunden werden. Die äußeren Seiten der Metallschichten 28 sind wiederum mit einer Lackschicht, insbesondere Klarlackschicht 30, einer Dicke von etwa 1 µm bis 3 µm überzogen. Die Außenseite des Paneelelements 14 bezogen auf den Laderaum 8 bzw. das Nutzfahrzeug 1 ist zudem mit einer Lackschicht 31 versehen, die eine Dicke zwischen 10 µm und 15 µm aufweist und/oder als Klarlackschicht ausgebildet ist.

In der Fig. 6 ist ein Querschnitt des Wandelements 11 im Bereich eines Ständerelements 18 und eines Verbindungsbereichs 16 zweier Paneelelemente 15 dargestellt. Die Paneelelemente 15 weisen angrenzend zueinander umgebogene Ränder 23 auf, die sich bei den dargestellten und insoweit bevorzugten Paeelelementen 15 wenigstens abschnittsweise senkrecht zum Wandelement 11 nach innen in Richtung des Laderaums 8 erstrecken. In diesen Abschnitten weisen die Ränder 23 der Paneelelemente 15 aneinandergrenzende Verbindungsflächen 24 auf, die über eine Klebeverbindung 32 miteinander verklebt und/oder über eine kraftschlüssige und/oder formschlüssige Verbindung miteinander verbunden sind. Einfach und zweckmäßig können in diesem Zusammenhang Nietverbindungen sein. Dann kann die etwaig zusätzliche Klebeverbindung bedarfsweise eher dem Abdichten als dem Verbinden dienen.

Der entsprechende Verbindungsbereich 16 wird von dem zugeordneten Ständerelement 18 überdeckt und übergriffen. Das Ständerelement 18 weist dabei die Form eines einseitig offenen Hohlprofils auf, das in seinem Inneren eine Aufnahme 33 für wenigstens Teile des Verbindungsbereichs 16 bereithält. Das Ständerelement 18 weist dabei einen trapezförmigen Querschnitt mit zwei in Richtung des Wandelements 11 schräg nach außen geneigten Seiten 20 auf. Diese Seiten 20 verlaufen dabei in einem Winkel α von etwa 130° bis 150° in Bezug auf den sich seitlich anschließenden Bereich der Paneelelemente 15. Angrenzend zu den beiden dem Ständerelement 18 zugeordneten Paneelelementen 15 weist das Ständerelement 18 Anlageflächen 34 zur Anlage an die Paneelelemente 15 auf, wobei die Anlageflächen 34 vorliegend wenigstens im Wesentlichen parallel zueinander ausgerichtet und vorliegend auch wenigstens im Wesentlichen in einer gemeinsamen Ebene angeordnet sind. Mit diesen Anlageflächen 34 ist das Ständerelement 18 mit den angrenzenden Paneelelementen 15 verbunden, insbesondere verklebt.

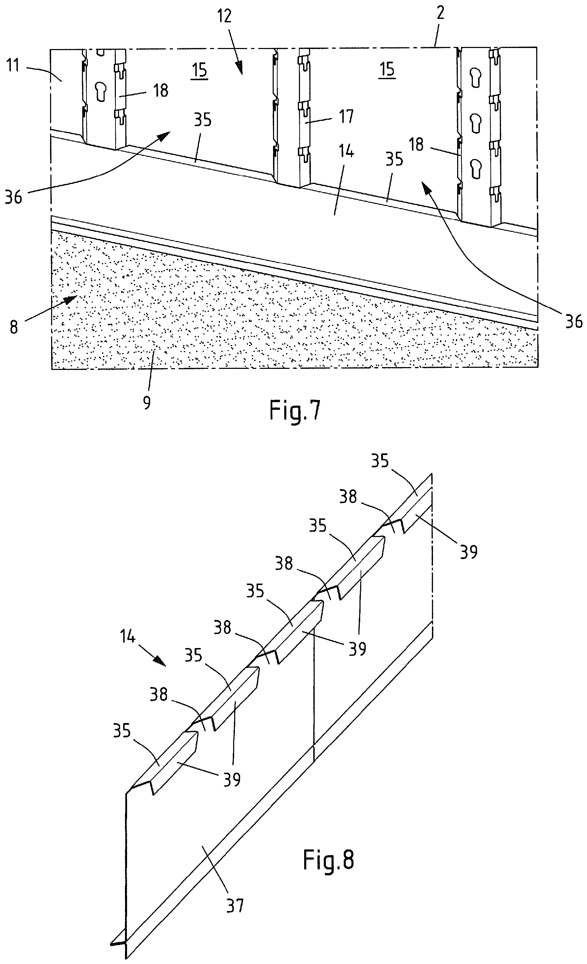

In der Fig. 7 ist der untere Rand des Wandelements 11 im Bereich der Sockelscheuerleiste 14 dargestellt. Die Sockelscheuerleiste 14 erstreckt sich in Längsrichtung des Wandelements 11. Abschnittsweise ist die Sockelscheuerleiste 14 dabei aus dem Laderaum 8 gesehen vor den Ständerelementen 17,18 angeordnet. Die dargestellte und insoweit bevorzugte Sockelscheuerleiste 14 liegt dabei abschnittsweise an der dem Laderaum 8 zugewandten Innenseite der Ständerelemente 17,18 an, wo sie bedarfsweise mit den Ständerelementen 17,18 verbunden, insbesondere verklebt, sein kann. Zwischen den Ständerelementen 17,18 erstreckt sich die Sockelscheuerleiste 14 mit entsprechend ausgebildeten Laschen 35 in den Zwischenraum 36 zwischen den Ständerelementen 17,18 hinein. Hierzu sind die Laschen 35 am oberen Rand der Sockelscheuerleiste 14 angeordnet und ist die Sockelscheuerleiste 14 zur Bildung der Laschen 35 am oberen Rand nach hinten in Richtung des Wandpaneels 12 umgebogen. Bei der dargestellten und insoweit bevorzugten Sockelscheuerleiste 14 erstreckt sich diese auf der Innenseite der Ständerelemente 17,18 wenigstens im Wesentlichen parallel zu den Ständerelementen 17,18. Im Zwischenraum 36 zwischen den Ständerelementen 17,18 erstreckt sich die Sockelscheuerleiste 14 bzw. die Lasche 35 wenigstens im Wesentlichen parallel zum Ladeboden 9, auch wenn dies nicht zwingend der Fall sein muss. Insbesondere eine leichte Neigung der Laschen 35 in Richtung des Laderaums 8 und Ladebodens 9 kann zweckmäßig für die Reinigung des Kofferaufbaus 2 sein. Zudem erstrecken sich die Laschen 35 der Sockelscheuerleiste 14 seitlich wenigstens etwa von einem Ständerelement 17,18 zum benachbarten Ständerelement 17,18 und nach hinten bis zum Wandpaneel 12. Die Laschen 35 der Sockelscheuerleiste 14 erstrecken sich vorzugsweise wenigstens im Wesentlichen entlang der gesamten Zwischenräume 36 zwischen den Ständerelementen 17,18 und bilden im Zwischenraum 36 zwischen den Ständerelementen 17,18 den oberen Abschluss der Sockelscheuerleiste 14.

In der Fig. 8 ist die Sockelscheuerleiste 14 separat dargestellt. Dabei ist der sich seitlich in Richtung des Laderaums 8 vor den Ständerelementen 17,18 erstreckende Abschnitt 37 der Sockelscheuerleiste 14 in vertikaler Ausrichtung dargestellt. Am oberen Rand dieses Abschnitts 37 sind nach hinten in Richtung des Wandpaneels 12 umgebogene, rollierte oder abgekantete Laschen 35 dargestellt, die sich in die Zwischenräume 36 zwischen den Ständerelementen 17,18 hinein erstrecken, und zwar in etwa parallel zum Ladeboden 9. Die Aussparungen 38 der Sockelscheuerleiste 14 zwischen den Laschen 35 weiten sich in Richtung des Wandpaneels 12 aus und verlaufen in diesem Bereich etwa paraallel zu den angrenzenden Seitenflächen 21 der Ständerelemente 17,18. Am hinteren und freien Ende der Laschen 35 sind Laschenränder 39 vorgesehen, die gegenüber den Laschen 35 nach unten in Richtung des Ladebodens 9 umgebogen, rollierte oder abgekantet sind. Die Laschenränder 39 erstrecken sich dabei wenigstens im Wesentlichen parallel zum Wandpaneel 12 bzw. zu den Paneelelementen 15.

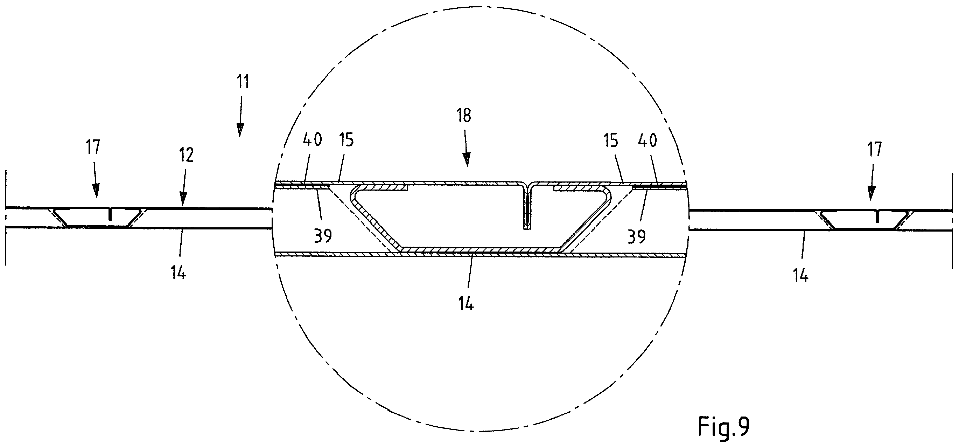

In der Fig. 9 ist die Anbindung der Sockelscheuerleiste 14 an das Wandpaneel 12 bzw. die Paneelemente 15 im Schnitt dargestellt. Die Laschenränder 39 liegen dabei an dem Wandpaneel 12 bzw. den Paneelementen 15 an und sind mit ihrer Rückseite mit dem Wandpaneel 12 bzw. den Paneelementen 15 verbunden. Die Verbindung 40 wird bei dem dargestellten und insoweit bevorzugten Wandelement 11 durch eine Klebeverbindung bereitgestellt.

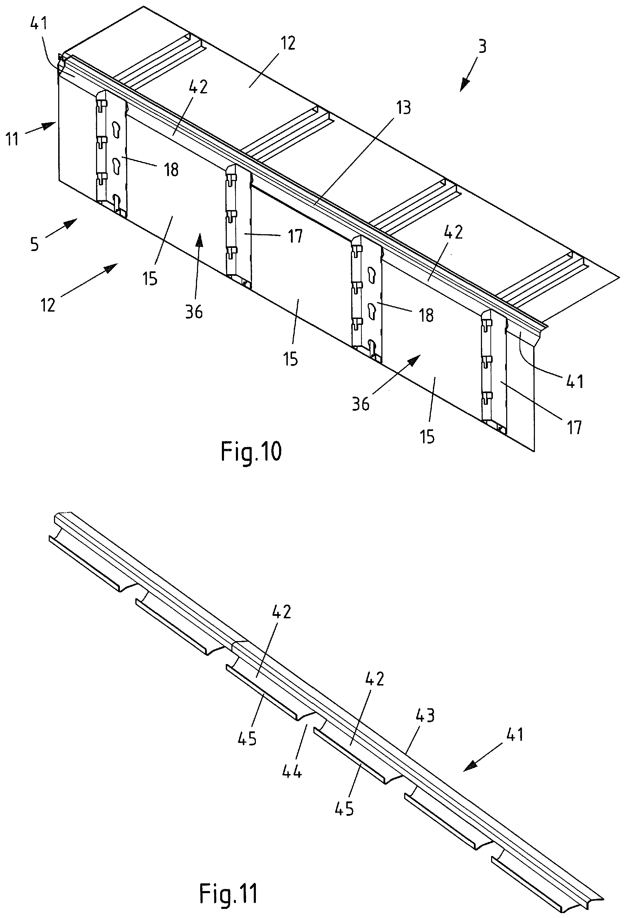

In der Fig. 10 ist der obere Rand des Wandelements 11 im Bereich der Dachinnenleiste 41 dargestellt. Die Dachinnenleiste 41 erstreckt sich in Längsrichtung des Wandelements 11. Abschnittsweise ist die Dachinnenleiste 41 aus dem Laderaum 8 gesehen vor den Ständerelementen 17,18 angeordnet. Die dargestellte und insoweit bevorzugte Dachinnenleiste 41 liegt zudem abschnittsweise an der dem Laderaum 8 zugewandten Innenseite der Ständerelemente 17,18 an, wo sie bedarfsweise mit den Ständerelementen 17,18 verbunden, insbesondere verklebt, sein kann. Zwischen den Ständerelementen 17,18 erstreckt sich die Dachinnenleiste 41 mit entsprechend ausgebildeten Laschen 42 in den Zwischenraum 36 zwischen den Ständerelementen 17,18 hinein. Hierzu sind die Laschen 42 am unteren Rand der Dachinnenleiste 41 angeordnet und ist die Dachinnenleiste 41zur Bildung der Laschen 42 am oberen Rand nach hinten in Richtung des Wandpaneels 12 umgebogen. Bei der dargestellten und insoweit bevorzugten Dachinnenleiste 41 erstreckt sich diese auf der Innenseite der Ständerelemente 17,18 wenigstens im Wesentlichen parallel zu den Ständerelementen 17,18. Im Zwischenraum 36 zwischen den Ständerelementen 17,18 erstreckt sich die Dachinnenleiste 41 bzw. die Lasche 42 wenigstens im Wesentlichen parallel zum Ladeboden 9 und/oder Dach 3, auch wenn dies nicht zwingend der Fall sein muss. Insbesondere eine leichte Neigung der Laschen 42 in Richtung des Laderaums 8 und Ladebodens 9 kann zweckmäßig für die Reinigung des Kofferaufbaus 2 sein. Zudem erstrecken sich die Laschen 42 der Dachinnenleiste 41 seitlich wenigstens etwa von einem Ständerelement 17,18 zum benachbarten Ständerelement 17,18 und nach hinten bis zum Wandpaneel 12. Die Laschen 42 der Dachinnenleiste 41 erstrecken sich vorzugsweise wenigstens im Wesentlichen entlang der gesamten Zwischenräume 36 zwischen den Ständerelementen 17,18 und bilden im Zwischenraum 36 zwischen den Ständerelementen 17,18 den unteren Abschluss der Dachinnenleiste 41.

In der Fig. 11 ist die Dachinnenleiste separat dargestellt. Dabei ist der sich seitlich in Richtung des Laderaums 8 vor den Ständerelementen 17,18 erstreckende Abschnitt 43 der Dachinnenleiste 41 rechts dargestellt. Am unteren Rand dieses Abschnitts 43 sind nach hinten in Richtung des Wandpaneels 12 umgebogene, rollierte oder abgekantete Laschen 42 dargestellt, die sich in die Zwischenräume 36 zwischen den Ständerelementen 17,18 hinein erstrecken, und zwar in etwa parallel zum Ladeboden 9 und/oder zum Dach 3. Die Aussparungen 44 der Dachinnenleiste 41 zwischen den Laschen 42 weiten sich in Richtung des Wandpaneels 12 aus und verlaufen in diesem Bereich etwa paraallel zu den angrenzenden Seitenflächen 21 der Ständerelemente 17,18. Am hinteren und freien Ende der Laschen 42 sind Laschenränder 45 vorgesehen, die gegenüber den Laschen 42 nach oben in Richtung des Dachs 3 bzw, einer Holmstruktur 13 umgebogen, rolliert oder abgekantet sind. Die Laschenränder 45 erstrecken sich dabei wenigstens im Wesentlichen parallel zum Wandpaneel 12 bzw. zu den Paneelelementen 15.

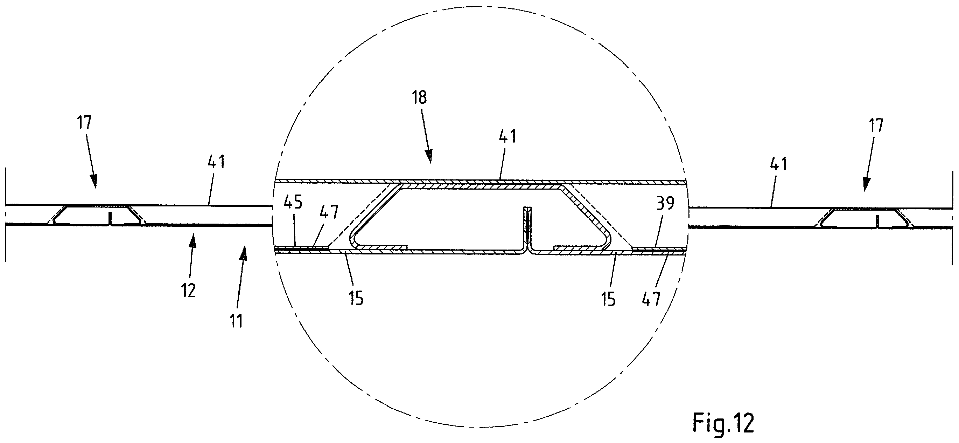

In der Fig. 12 ist die Anbindung der Dachinnenleiste 41 an das Wandpaneel 12 bzw. die Paneelelemente 15 im Schnitt dargestellt. Die Laschenränder 45 liegen dabei an dem Wandpaneel 12 bzw. den Paneelelementen 15 an und sind mit ihrer Rückseite mit dem Wandpaneel 12 bzw. den Paneelelementen 15 verbunden. Die Verbindung 47 wird bei dem dargestellten und insoweit bevorzugten Wandelement 11 durch eine Klebeverbindung bereitgestellt.

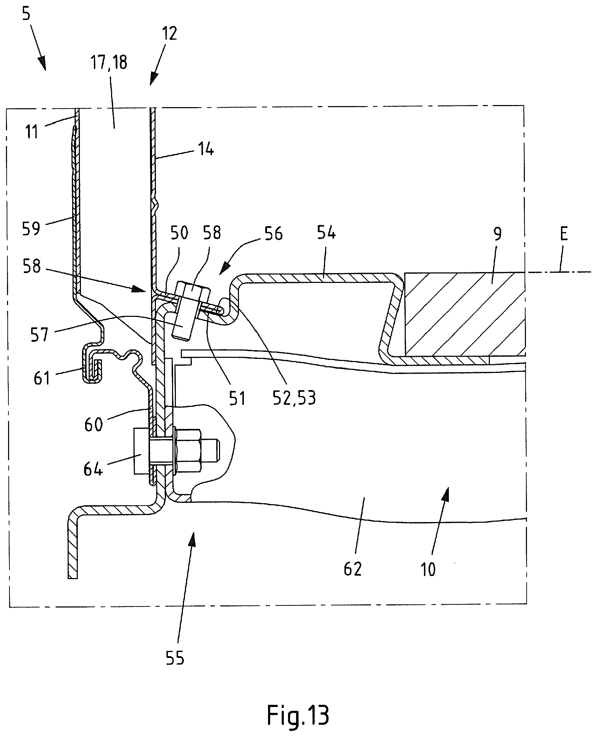

In der Fig. 13 ist der untere Rand der Seitenwand 5 dargestellt, der mit der Bodenstruktur 10 fest verbunden ist. Dabei weist die Seitenwand am unteren Rand 15 wie die Bodenstruktur 10 am äußeren Rand jeweils eine Montageleiste 50,51 zum Montieren der Seitenwand 5 an der Bodenstruktur 10 auf. Die Montageleisten 50,51 stellen dabei korrespondierende Anlageflächen 52,53 bereit, die im dargestellten und verbundenen Zustand der Seitenwand 5 mit der Bodenstruktur 10 aneinander anliegen. Zudem ist die Montageleiste 51 und die zugehörige Anlagefläche 53 der Bodenstruktur 10 so zu der Montageleiste 50 und der zugehörigen Anlagefläche 52 der Seitenwand 5 angeordnet, dass die Montageleiste 50 der Seitenwand 5 durch die Montageleiste 51 der Bodenstruktur 10 formschlüssig unterfangen wird. Des Weiteren sind die korrespondierenden Montageleisten 50,51 und Anlageflächen 52,53 schräg ausgerichtet, und zwar in einem Querschnitt zum Kofferaufbau 2 gesehen sowohl schräg zur Seitenwand 5 als auch schräg zur Bodenstruktur 10. Dabei erstrecken sich die Montageleiste 50 und die Anlagefläche 52 der Seitenwand 5 wenigstens im Wesentlichen in Richtung des Laderaums 8 bzw. der Bodenstruktur 10 schräg nach unten, während sich die Montageleiste 51 und die Anlagefläche 53 der Bodenstruktur 10 zur Außenseite des Kofferaufbaus 2 bzw. der Seitenwand 5 schräg nach oben erstrecken.

Dies kann beim Fügen der Seitenwand 5 mit der Bodenstruktur 10 dazu genutzt werden, dass sich die Seitenwand 5 und die Bodenstruktur 10 finden, insbesondere in der vorbestimmten Position zueinander. Wird die Seitenwand 5 seitlich an die Bodenstruktur 10 angenähert und die Seitenwand 5 dann nach unten abgesetzt, gelangen die Anlageflächen 52,53 der Montageleisten 50,51 in Anlage aneinander, so dass die Anlagefläche 52 der Seitenwand 5 an der Anlagefläche 53 der Bodenstruktur 10 abgleitet. Dies geht einher mit einem Heranrücken der Seitenwand 5 seitlich an die Bodenstruktur 10, bis die Seitenwand 5 die gewünschte Position zur Bodenstruktur 10 eingenommen hat und ein Formschluss nach unten bzw. in Schwerkraftrichtung zwischen den Montageleisten 50,51 etabliert ist.

Die Montageleisten 50,51 der Seitenwand 5 und der Bodenstruktur 10 sind oberhalb eines unteren Endes der Seitenwand 5 sowie unterhalb eines seitlichen unteren Endes der Bodenstruktur 10 angeordnet, so dass die Seitenwand 5 bereits mehr oder weniger durch die Bodenstruktur 10 abgestützt werden kann, bereits bevor die Anlageflächen 52,53 der Montageleisten 50,51 gegenseitig in Anlage gelangen. Außerdem können so die Seitenwand 5 und die Bodenstruktur 10 im miteinander verbundenen Zustand auch seitlich unterhalb der Montageleisten 50,51 in Anlage aneinander gelangen und so einem Kippen der Seitenwand 5 zur Außenseite des Kofferaufbaus 2 entgegenwirken.

Bei dem dargestellten und insoweit bevorzugten Kofferaufbau 2 erstrecken sich die Montageleisten 50,51 und die zugehörigen Anlageflächen 52,53 wie in der Fig. 13 dargestellt längs der Seitenwand 5, und zwar vorzugsweise wenigstens im Wesentlichen über die gesamte Länge der Seitenwand 5 sowie durchgängig. Grundsätzlich wäre es aber auch denkbar, dass die Montageleisten 50,51 und die zugehörigen Anlageflächen 52,53 entlang der Seitenwand 5 abschnittsweise unterbrochen sind. Dann können entlang der Seitenwand 5 in einer Reihe beabstandet hintereinander Montageleisten 50,51 und zugehörige Anlageflächen 52,53 vorgesehen sein. Zudem ist bei dem dargestellten und insoweit bevorzugten Kofferaufbau 2 an der Bodenstruktur 10 angrenzend zur Seitenwand 5 ein Bodenprofil 54 vorgesehen. Das Bodenprofil 54 bildet beim dargestellten und insoweit bevorzugten Kofferaufbau 2 zusammen mit den an den anderen Rändern der Bodenstruktur 10 vorgesehenen Bodenprofilen 54 einen umlaufenden Bodenrahmen 55.

In der Bodenstruktur 10 bzw. in dem Bodenprofil 54 ist seitlich entlang der Seitenwand 5 eine Rinne 56 vorgesehen, die im Querschnitt nach Art einer Nut ausbildet ist und deren Innenseite die Montageleiste 51 und die zugehörige Anlagefläche 53 der Bodenstruktur 10 bereitstellt. Dabei ist das Bodenprofil 54 bzw. die Rinne 46 so ausgebildet, dass im verbundenen Zustand der Seitenwand 5 die Anlageflächen 52,53 und die Montageleisten 50,51 jeweils unterhalb der durch die Oberseite des Ladebodens 8 definierten Ebene E angeordnet sind. Zudem sind die Montageleisten 50,51 über Schrauben 57 entlang der Seitenwand 5 miteinander verbunden, wobei die Schrauben 57 die Montageleisten 50,51 und Anlageflächen 52,53 abschnittsweise durchdringen. Die Schrauben 57 sind zudem so von oben, insbesondere vom Laderaum 8 aus, eingeführt und verschraubt, dass die Schraubenköpfe 63 ebenfalls in der seitlichen Rinne 56 der Bodenstruktur 10 und unterhalb der Oberseite des Ladebodens 8 angeordnet sind. Zusätzlich zur Verschraubung, die vorzugsweise eine Reihe von Schrauben 57 in der Längsrichtung der Seitenwand 5 umfasst, können die Anlageflächen 52,53 der Montageleisten 50,51 miteinander verklebt sein.

Bei dem dargestellten und insoweit bevorzugten Kofferaufbau 2 weist die Seitenwand 5 eine Sockelscheuerleiste 14 auf, welche die Montageleiste 50 der Seitenwand 52 bereitstellt. Dabei ist die Montageleiste 50 im dargestellten und insoweit bevorzugten Ausführungsbeispiel in Form einer Falz 58 ausgebildet. Die Sockelscheuerleiste 14 als solche ist dabei als Blechteil ausgebildet, wobei das Blech, insbesondere Stahlblech, im Bereich der Montageleiste 50 zweifach aufeinander gelegt ist. Die Form der dargestellten Sockelscheuerleiste 14 ist dabei durch Rollieren erzeugt worden. Ebenfalls ist das seitliche Bodenprofil 54 durch Rollieren hergestellt worden, was jedoch ebenfalls nicht zwingend ist.

Am unteren Ende der Seitenwand 5 sind zwei Blechlagen 59,60 vorgesehen, die über eine Falzverbindung 61 miteinander verbunden sind und so die Seitenwand 5 nach unten abschließen. Dabei ist eine Blechlage 59 der Seitenwand 5 und eine Blechlage 60 der Bodenstruktur 10 zugeordnet. Die der Bodenstruktur 10 zugeordnete Blechlage 60 ist zudem mit einer Schraube 64 mit dem Bodenprofil 10 verbunden. Die andere Blechlage 59 ist an der Außenseite der Seitenwand 5 vorgesehen und dort vorzugsweise verklebt. Es kann sich aber auch um eine Fortsetzung des Wandpaneels 12 nach unten handeln. Jedenfalls ist es bevorzugt, wenn die Verbindung der beiden Blechlagen 59,60 erst nach der eigentlichen Montage der Seitenwand 5 erfolgt, die insbesondere nach der Montage der einen Blechlage 60 an der Bodenstruktur 10 bzw. dem Bodenprofil 54 durchgeführt wird. Abschließend werden die beiden Blechlagen 59,60 dann durch bekannte Werkzeuge über eine Falz 61 miteinander verbunden.

Unterhalb des Ladebodens 9 sind bei dem dargestellten und insoweit bevorzugten Kofferaufbau 2 eine Reihe von Querträgern 62 angeordnet. Die Querträger 62 sind parallel zueinander und voneinander beabstandet vorgesehen. Dabei können die Querträger 62 mehr oder weniger gleichmäßig über die Längserstreckung der Bodenstruktur 10 verteilt angeordnet sein. Zudem sind die Seitenwände 5 und die Bodenprofile 54 mit den Querträgern 62 verbunden, und zwar insbesondere über Schraubverbindungen 64. Die Verschraubungen 64 sind dabei durch die dem Bodenprofil 54 zugeordnete Blechlage 60 hindurchgeführt.

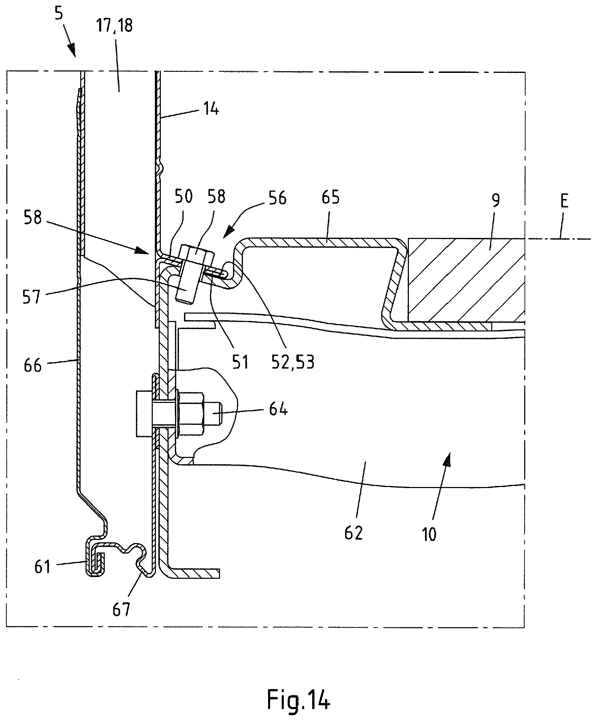

In der Fig. 14 ist ein alternativer Kofferaufbau im Bereich der Verbindung einer Seitenwand 5 mit der Bodenstruktur 10 in einer Schnittansicht dargestellt. Die Bodenstruktur 10 entspricht dabei der Bodenstruktur 10 des zuvor beschriebenen Kofferaufbaus 2, jedoch erstreckt sich die Seitenwand 5 weiter in Richtung des unteren Rands des Bodenprofils 65. Am unteren Ende der Seitenwand 53 sind ebenfalls zwei Blechlagen 66,67 vorgesehen, wobei die der Seitenwand 53 zugeordnete Blechlage 66 mit der Außenseite der Seitenwand verklebt und die der Bodenstruktur 10 zugeordnete Blechlage 67 mit dem Bodenprofil 42 und den Querträgern 50 über eine Schraubverbindung 56 verschraubt ist. Nach dem Absenken der Seitenwand 5 mit der bereits montierten, zugehörigen Blechlage 66 gegenüber dem Bodenprofil 65 mit der bereits montierten, zugehörigen Blechlage 67 werden die Blechlagen 66,67 über eine Falz 61 verbunden. Zudem ist eine separate Schraubverbindung 64 zwischen dem Bodenprofil 65 und den Querträgern 62 vorgesehen, die jedoch bereits vor dem Fügen der Seitenwand 5 vorgesehen ist. Im Übrigen sind die beiden Kofferaufbauten 2 wenigstens im Wesentlichen analog zueinander aufgebaut.

### Bezugszeichenliste

- 1: Nutzfahrzeug
- 2: Kofferaufbau
- 3: Dach
- 4: Stirnwand
- 5: Seitenwand
- 6: Rückwand
- 7: Flügeltür
- 8: Laderaum
- 9: Ladeboden
- 10: Bodenstruktur
- 11: Wandelement
- 12: Wandpaneel
- 13: Holmstruktur
- 14: Sockelscheuerleiste
- 15: Paneelelement
- 16: Verbindungsbereich
- 17,18: Ständerelement
- 19: Ladungssicherungsöffnung
- 20: Seite
- 21: Seitenfläche
- 22: Verbindungsmittel
- 23: Rand
- 24: Verbindungsfläche
- 25: Verbundlaminat
- 26: Kunststoffschicht
- 27: Klarlackschicht
- 28: Metallschicht
- 29: Aluminium-Zink-Beschichtung
- 30: Klarlackschicht
- 31: Lackschicht
- 32: Klebeverbindung
- 33: Aufnahme
- 34: Anlagefläche
- 35: Lasche
- 36: Zwischenraum
- 37: Abschnitt
- 38: Aussparung
- 39: Laschenrand
- 40: Verbindung
- 41: Dachinnenleiste
- 42: Lasche
- 43: Abschnitt
- 44: Aussparung
- 45: Laschenrand
- 46: Verbindung
- 50,51: Montageleiste
- 52,53: Anlagefläche
- 54: Bodenprofil
- 55: Bodenrahmen
- 56: Rinne
- 57: Schraube
- 58: Falz
- 59,60: Blechlage
- 61: Falz
- 62: Querträger
- 63: Schraubenkopf
- 64: Schraubverbindungen

## Patentansprüche

1. Wandelement (11) eines Kofferaufbaus (2) eines Nutzfahrzeugs (1), insbesondere Lastkraftwagen, Anhänger oder Sattelauflieger, mit einem Wandpaneel (12) und mit mehreren zwischen den seitlichen Rändern des Wandelements (11) und mit wenigstens im Wesentlichen parallel zueinander und beabstandet voneinander angeordneten sowie zur Aussteifung des Wandelements (11) mit dem Wandpaneel (12) verbundenen Ständerelementen (17,18), wobei dem unteren Rand des Wandelements (11) eine Sockelscheuerleiste (14) und/oder dem oberen Rand des Wandpaneels eine Dachinnenleiste (41) zugeordnet ist und wobei die Ständerelemente (17,18) abschnittsweise zwischen dem Wandpaneel (12) einerseits und der Sockelscheuerleiste (14) und/oder der Dachinnenleiste (41) andererseits angeordnet sind,
**dadurch gekennzeichnet, dass**
die Sockelscheuerleiste (14), insbesondere am oberen Rand der Sockelscheuerleiste (14), und/oder die Dachinnenleiste (41), insbesondere am unteren Rand der Dachinnenleiste (41), sich zwischen wenigstens einigen der Ständerelemente (17,18) in Richtung des Wandpaneels (12) erstreckende Laschen (35,42) aufweist.

2. Wandelement nach Anspruch 1,
**dadurch gekennzeichnet, dass**
die Laschen (35,42) der Sockelscheuerleiste (14) und/oder der Dachinnenleiste (41) im hinteren Bereich am Wandpaneel (12) anliegen und dass, vorzugsweise, die Laschen (35,42) der Sockelscheuerleiste (14) und/oder der Dachinnenleiste (41) im hinteren Bereich mit dem Wandpaneel (12) verbunden, insbesondere verklebt, sind.

3. Wandelement nach Anspruch 1 oder 2,
**dadurch gekennzeichnet, dass**
die Laschen (35,42) der Sockelscheuerleiste (14) und/oder der Dachinnenleiste (41) angrenzend zum Wandpaneel (12) sich parallel zum Wandpaneel (12), insbesondere nach unten und/oder oben, erstreckende Laschenränder (39,45) aufweisen und dass, vorzugsweise, die Laschenränder (39,45) mit dem Wandpaneel (12) verbunden, insbesondere verklebt sind.

4. Wandelement nach einem der Ansprüche 1 bis 3,
**dadurch gekennzeichnet, dass**
die Sockelscheuerleiste (14) und/oder die Dachinnenleiste (41) aus wenigstens einem Blechteil, insbesondere rollierten Blechteil und/oder Stahlblechteil, gebildet und/oder als Profil ausgebildet ist.

5. Wandelement nach Anspruch 4,
**dadurch gekennzeichnet, dass**
die Laschen (35,42) der Sockelscheuerleiste (14), insbesondere am oberen Rand der Sockelscheuerleiste (14), und/oder die Dachinnenleiste (41), insbesondere am unteren Rand der Dachinnenleiste (41), nach hinten umgebogen, rolliert und/oder abgekantet sind.

6. Wandelement nach einem der Ansprüche 3 bis 5,
**dadurch gekennzeichnet, dass**
die Laschenränder (39,44), insbesondere am oberen Rand der Sockelscheuerleiste (14), und/oder die Dachinnenleiste (41), insbesondere am unteren Rand der Dachinnenleiste (41), nach hinten umgebogen, rolliert und/oder abgekantet sind.

7. Wandelement nach einem der Ansprüche 1 bis 6,
**dadurch gekennzeichnet, dass** sich die Ständerelemente (17,18) über wenigstens im Wesentlichen die gesamte Höhe des Wandelements (11) und/oder Wandpaneels (12) erstrecken und/oder dass das Wandpaneel (12) ein wenigstens im Wesentlichen geschlossenes Wandpaneel ist.

8. Wandelement nach einem der Ansprüche 1 bis 7,
**dadurch gekennzeichnet, dass**
das wenigstens eine Wandpaneel (12) aus einem Verbundlaminat (25) umfassend wenigstens zwei Metallschichten (28) und wenigstens eine zwischen den wenigstens zwei Metallschichten (28) vorgesehene Kunststoffschicht (26) gebildet wird und dass, vorzugsweise, die wenigstens eine Kunststoffschicht (26) wenigstens im Wesentlichen aus einem thermoplastischen Kunststoff, vorzugsweise aus wenigstens einem Olefin, insbesondere wenigstens überwiegend aus Polypropylen (PP), und/oder wenigstens eine Metallschicht (28) aus Aluminium und/oder Stahl und/oder wenigstens eine Außenseite des Wandpaneels (12) wenigstens im Wesentlichen aus einem Lack, insbesondere Klarlack (31), gebildet ist.

9. Wandelement nach einem der Ansprüche 1 bis 8,
**dadurch gekennzeichnet, dass**
das Wandpaneel (12) eine Mehrzahl von nebeneinander angeordneten Paneelelementen (15) aufweist und dass, vorzugsweise, die Paneelelemente (15) sich wenigstens im Wesentlichen quer zur Längsrichtung des Wandelements (11) erstreckende, insbesondere von dem Wandpaneel (12) nach innen in Richtung der Ständerelemente (17,18) vorstehende, Verbindungsbereiche (16) bilden.

10. Wandelement nach Anspruch 9,
**dadurch gekennzeichnet, dass**
die miteinander verbundenen Paneelelemente (15) an ihren jeweils benachbarten Rändern (23) zur Innenseite des Wandelements (11) umgebogen, insbesondere abgekantet oder rolliert, sind und dass, vorzugsweise, die umgebogenen, insbesondere abgekanteten oder rollierten, benachbarten Ränder (23) der Paneelelemente (15) jeweils miteinander verbunden, insbesondere verklebt, sind.

11. Wandelement nach Anspruch 9 oder 10,
**dadurch gekennzeichnet, dass**
die Ständerelemente (17,18) wenigstens teilweise den Verbindungsbereichen (16) der Paneelelemente (15) zugeordnet sind und dass, vorzugsweise, die Ständerelemente (17,18) wenigstens teilweise die Verbindungsbereiche (16) der Paneelelemente (15) überdeckend und/oder überbrückend angeordnet sind und dass, weiter vorzugsweise, die Ständerelemente (17,18) wenigstens teilweise außerhalb der Verbindungsbereiche (16) der Paneelelemente (15) mit jeweils den über Verbindungsbereiche (16) miteinander verbundenen Paneelelementen (15) verbunden, insbesondere verklebt, sind.

12. Wandelement nach einem der Ansprüche 1 bis 11,
**dadurch gekennzeichnet, dass**
die Ständerelemente (17,18) als Profile, vorzugsweise Metallprofile, ausgebildet sind und/oder dass die Ständerelemente (17,18) als, insbesondere offene, Hohlprofile ausgebildet sind und/oder dass die Ständerelemente (17,18), insbesondere wenigstens im Wesentlichen durchgängig, einen trapezförmigen und/oder omegaförmigen und/oder hutförmigen Querschnitt aufweist.

13. Wandelement nach einem der Ansprüche 1 bis 12,
**dadurch gekennzeichnet, dass**
die Ständerelemente (17,18) jeweils eine Aufnahme (33) zur wenigstens abschnittsweisen Aufnahme eines, insbesondere sich seitlich von dem Wandpaneel (12) weg und in Richtung des jeweiligen Ständerelements (17,18) erstreckenden Verbindungsbereichs (16) aufweisen und dass, vorzugsweise, die Ständerelemente (17,18) mit Anlageflächen (34) zu gegenüberliegenden Seiten der Verbindungsbereiche (16,) an den zugehörigen Paneelelementen (15) anliegen, insbesondere an den zugehörigen Paneelelementen (15) verklebt sind.

14. Wandelement nach einem der Ansprüche 1 bis 13,
**dadurch gekennzeichnet, dass** das Wandelement (11) als Seitenwand (5) oder Stirnwand (4) ausgebildet ist.

15. Kofferaufbau (2) eines Nutzfahrzeugs (1), insbesondere Lastkraftwagen, Anhänger oder Sattelauflieger, mit mehreren Wandelementen (11),
**dadurch gekennzeichnet, dass** wenigstens ein Wandelement (11) nach einem der Ansprüche 1 bis 14 ausgebildet ist.
